# EUROPEAN PATENT SPECIFICATION

(11) **EP 2 431 908 B1**
(45) Date of publication and mention of the grant of the patent: **13.07.2016**
(21) Application number: 09845736.9
(22) Date of filing: 28.12.2009
(51) Int. Cl.: G06K 7/00, G06K 7/10

(54) **LABEL ANTI-COLLISION METHOD AND SYSTEM**
VERFAHREN UND SYSTEM FÜR ETIKETTKOLLISIONSSCHUTZ
PROCÉDÉ ET SYSTÈME ANTI-COLLISION D'ÉTIQUETTES

(30) Priority: 12.06.2009 CN 200910107964
(43) Date of publication of application: 21.03.2012
(73) Proprietor: ZTE Corporation, Shenzhen, Guangdong 518057 (CN)
(72) Inventor: DU, Jiang, Shenzhen Guangdong 518057 (CN); WANG, Li, Shenzhen Guangdong 518057 (CN); ZHANG, Yongzhi, Shenzhen Guangdong 518057 (CN)
(74) Representative: Manitz, Finsterwald & Partner GbR
(86) International application number: PCT/CN2009/076150
(87) International publication number: WO 2010/142127

(56) References cited:
- WO-A1-2006/095953
- CN-A- 101 276 395
- CN-A- 101 276 395
- CN-A- 101 430 753
- CN-A- 101 430 753
- US-A1- 2005 253 687
- US-A1- 2009 134 975

## Description

### Technical Field

The present invention relates to the field of wireless communication, and more particularly, to a label anti-collision method in the field of radio frequency identification (RFID). The features of the preamble of the independent claims are known from CN 101 430 753 A. Related technologies are known from US 2009/134975 A1 and CN 101 276 395 A.

### Background of the Related Art

In practical RFID applications, there are many cases that one reader corresponds to a plurality of electronic labels in a RF field. When the reader counts a plurality of electronic labels simultaneously, there is channel contention and a collision will be occurred, thus the electronic labels cannot correctly send information to the reader. Therefore, a certain mechanism is needed to avoid or reduce collisions.

In the existing RFID international standard ISO 18000-6, class A and class C apply a time slot ALOHA algorithm, while class B uses a Binary Tree algorithm to solve the collision problem. Both the time slot ALOHA and the Binary Tree are based on a method of time division multiple access.

The time slot ALOHA algorithm divides the time into several discrete time slots, requires that the labels randomly select one time slot to send data at the boundary of the time slot. In the ISO 18000-6 class A and class C protocol, the process of using the time slot ALOHA algorithm for anti-collision is that: at the beginning of each counting process, the reader notifies all the labels of an optional time slot range, and the label randomly selects a time slot to reply, the labels might send successfully or completely collide, and if a collision occurs, a new time slot will be re-selected and data will be sent, until all the labels send successfully.

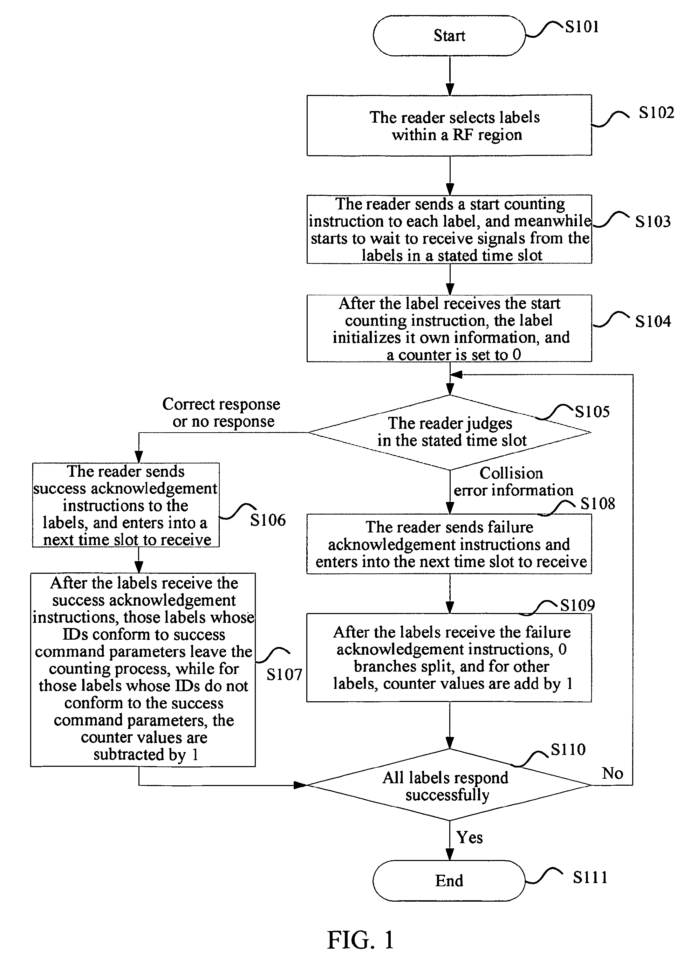

The basic idea of the Binary Tree is to split the labels under the collision into left and right subsets 0 and 1; first query the subset 0; if there is no collision, then correctly identify the labels; if there are collisions, further split the subset 0 into two subsets 00 and 01; and the rest may be deduced by analogy, until all the labels in the subset 0 are identified, then query the subset 1 according to these steps. The Binary Tree algorithm is shown as FIG. 1.

FIG. 1 is a flow chart of counting with the existing Binary Tree algorithm, and the specific process is as follows:
S101, start;
S102, the reader selects the labels in an effective RF field area;
S103, the reader sends select instruction, after all the labels receive the instructions, the labels perform to match a condition, and those labels meeting the condition enter into the counting process; and the reader sends start counting instruction, and at the same time starts to receive signals from the labels in the stated time slot;
S104, after the labels receive the start counting instruction, the labels initialize their own information, setting counters to be 0, and the branches whose counter values are 0 respond to the reader;
S105, judge whether the reader correctly receives response information from the labels or there is no response information from the labels or response information is collision error information; if it is the first one or the second one, proceed to S106, and if it is the third one, proceed to S108;
S106, the reader sends success acknowledgement instructions to the labels, and enters into the next time slot to receive;
S107, when the labels receive the success acknowledgement instructions, those labels whose IDs (label identifications) conform to success command parameters (the labels that correctly send the response information) leave the counting process after responding with acknowledgement successfully and do not respond any instruction related to the counting any more, while for those labels whose IDs do not conform to the success command parameters (i.e., the labels whose counter values are not 0), the counter values are subtracted by 1, and the labels whose counter values are 0 respond to the reader, proceed to S110;
   if the response information from the labels is not received, there is no label to acknowledge at this time, thus the counter values of all the labels are subtracted by 1;
S108, if the reader receives the collision error response information from the labels within the stated time slot, the reader considers that a plurality of labels respond and the collisions occur, thus the reader sends failure acknowledgement instructions to the labels, and enters into the next time slot to receive;
S109, when the labels receive the failure acknowledgement instructions, the labels whose counter values are 0 perform to split and a random number generator is started up, and the labels modify the counter values according to the generated random number; and for other labels (the labels whose counter values are not 0), counter values are added by 1, and then the labels whose counter values are 0 respond to the reader, proceed to S110;
S110, judge whether the counting process ends in accordance with an ending condition, if ending, exit the counting process, otherwise, go back to step S105 to count continuously;
S111, end the flow.

From the description of the Binary Tree anti-collision process, it can be seen that the Binary Tree method always binary splits at the left side of the tree, that is, near the labels of 0, the advantage of this method is that in the entire label counting process, the counter values of the labels do not change greatly, thus reducing empty time slots and improving the entire counting efficiency.

However, in the counting process, the Binary Tree method will result in a large number of collisions at the beginning of counting, this is because the counter values of all the labels are starting from 0, and if the number of labels is large, the collisions are a lot at the beginning of counting, which reduces the counting efficiency.

### Content of the Invention

In order to solve the above-mentioned technical problem, the present invention provides a label anti-collision method and system as defined in the independent claims, and the method and system are applied in a radio frequency identification system to solve the problem that the counters of the labels are relatively concentrated when the labels start to count in the radio frequency identification system.

A label anti-collision method is applied in a radio frequency identification system comprising labels and a reader, and when the labels enter into an counting process, the method comprises:
the reader sending the predetermined number of labels to the labels and further sending start counting instruction;
after a label receives the start counting instruction, the label selecting a random number as an initial value of a counter according to the predetermined number of labels and entering into the counting process.

Before the label enters into the counting process, the method comprises:
the reader selecting labels in an effective radio frequency field area;
the reader sending select instruction, and after the labels receive the select instruction, the labels performing a condition matching, and when meeting the condition the labels entering into the counting process.

The counting process comprises:
responding the information of the labels whose counter values are 0 to the reader;
the reader receiving the information of the labels;
if the reader receives a correct response information from a label or there is no response information within a stated time slot, the reader sending a success acknowledgement instruction to the label; and if the reader receives a collision error information within the stated time slot, the reader considering that a collision happens because a plurality of labels respond, and then sending failure acknowledgement instructions to the labels.

When the labels receive the success acknowledgement instructions, those labels whose label identifications conform to success command parameters comprising in the success acknowledgement instructions leave the counting process after further responding successfully; and for those labels whose label identifications do not conform to the success command parameters, the counter values of those labels are further subtracted by 1, and then the labels whose counter values are 0 further respond to the reader.

When the labels receive the failure acknowledgement instructions, those labels whose counter values are 0 further perform to split and a random number generator is started up, and the counter values are modified according to generated random numbers; and the labels whose counter values are not 0 further add the counter values by 1, while the labels whose counter values are 0 further respond to the reader.

A label anti-collision system comprises a reader and labels; wherein,
the reader is adapted to predetermine the number of labels, send the number of the labels to the labels, and send start counting instruction;
each of the labels is adapted, after receiving the start counting instruction, to select a random number as an initial value of a counter according to the predetermined number of the labels and enter into a counting process.

The system further comprises:
the reader is further adapted to select labels in an effective radio frequency field area and send select instruction before the labels enter into the counting process;
the labels are further adapted to perform a condition matching after receiving the select instruction, and the labels meeting the condition enter into the counting process.

The labels are further adapted to respond the reader with the information of the labels whose counter values are 0;
the reader is further adapted to receive the information of the labels within a stated time slot; and if the reader receives a correct response information from a label or there is no response information within the stated time slot, send a success acknowledgement instruction to the label, and if the reader receives a collision error information within the stated time slot, consider that a collision happens because a plurality of labels respond, and send failure acknowledgement instructions to the labels.

The labels are further adapted that:
when receiving the success acknowledgement instructions, those labels whose label identifications conform to success command parameters comprising in the success acknowledgement instructions leave the counting process after responding successfully; and for those labels whose label identification do not conform to the success command parameters, the counter values of those labels are subtracted by 1, and the labels whose counter values are 0 respond to the reader.

The labels are further adapted that:
when the labels receive the failure acknowledgement instructions, those labels whose counter values are 0 perform to split and a random number generator is started up, and the counter values are modified according to generated random numbers; and the labels whose counter values are not 0 add the counter values by 1, while the labels whose counter values are 0 respond to the reader.

With the technical scheme of the present invention, all the labels are hashed at the beginning of counting with the Binary Tree method, which reduces the probability of collisions and improves the counting efficiency.

### Brief Description of Drawings

FIG. 1 is a flow chart of counting with an existing Binary Tree;
FIG. 2 is a flow chart of counting in accordance with the present invention;
FIG. 3 is a schematic diagram of a Binary Tree counting labels;
FIG. 4 is a schematic diagram of counting after applying a method of the present invention.

### Preferred Embodiments of the Present Invention

In the following, the embodiments of the present invention are described in detail in combination with the accompanying drawings.

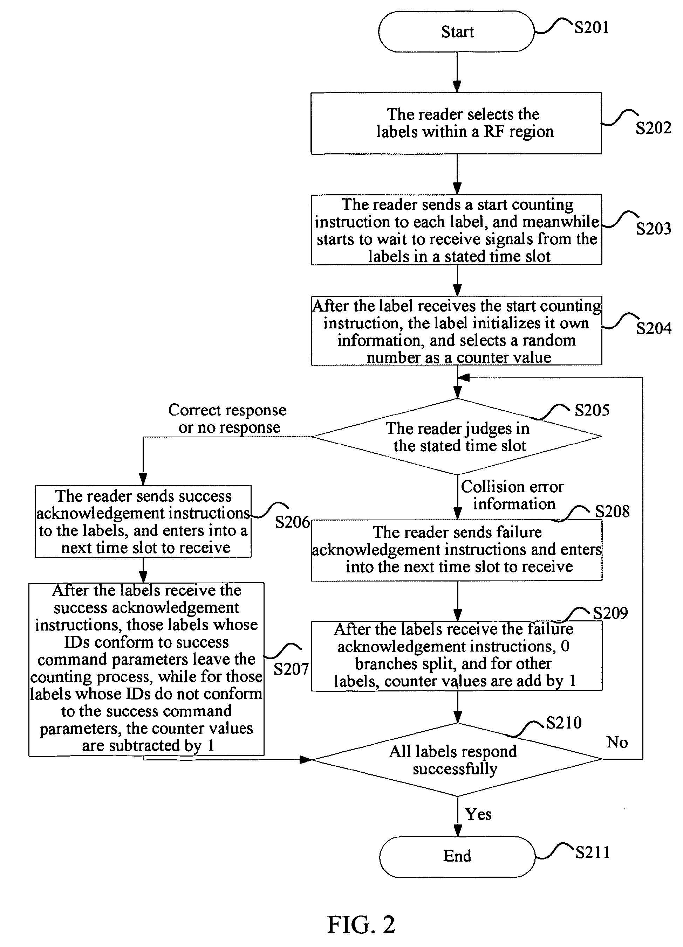

FIG. 2 is a flow chart of a counting algorithm after applying the present invention, the specific process is as follows:
S201, start;
S202, the reader selects the labels in the effective RF field area;
S203, the reader sends the select instruction, after all the labels receive the instruction, the labels perform to match a condition, and those labels meeting the condition enter into the counting process; and meanwhile, the reader sends the initial number of the labels to the labels via the select instruction;
   the reader sends the start counting instruction, and meanwhile, receives the signals from the labels within the stated time slot;
S204, after the labels receive the start counting instruction, the labels initialize their own information, selecting a random number as an initial value of each counter in the optional range notified by the reader, and the branches whose counter values are 0 respond to the reader;
S205, judge whether the reader correctly receives the response information from the labels or there is no response information from the labels or the response information is collision error information; if it is the first one or the second one, proceed to S206, and if it is the third one, proceed to S208;
S206, the reader sends success acknowledgement instructions to the labels, and enters into the next time slot to receive;
S207, when the labels receive the success acknowledgement instructions, those labels whose IDs (label identifications) conform to the success command parameters (the labels that correctly send the response information) leave the counting process after responding the acknowledgement successfully and do not respond any instruction related to the counting any more, while for those labels whose IDs do not conform to the success command parameters (i.e., labels whose counter values are not 0), the counter values are subtracted by 1, and the labels whose counter values are 0 respond to the reader, proceed to S210;
   if the response information from the labels is not received, there is no label to acknowledge at this time, thus the counter values of all the labels are subtracted by 1;
S208, if the reader receives the collision error response information from the labels within the stated time slot, the reader considers that a plurality of labels respond and the collisions occur, thus the reader sends failure acknowledgement instructions to the labels, and enters into the next time slot to receive;
S209, when the labels receive the failure acknowledgement instructions, the labels whose counter values are 0 perform to split and a random number generator is started up, and the labels modify the counter values according to the generated random number. For other labels (the labels whose counter values are not 0), counter values are added by 1, and then the labels whose counter values are 0 respond to the reader, proceed to S210;
S210, judge whether the counting process ends in accordance with an ending condition, if ending, exit the counting process, otherwise, go back to step 4 to count continuously;
S211, end the flow.

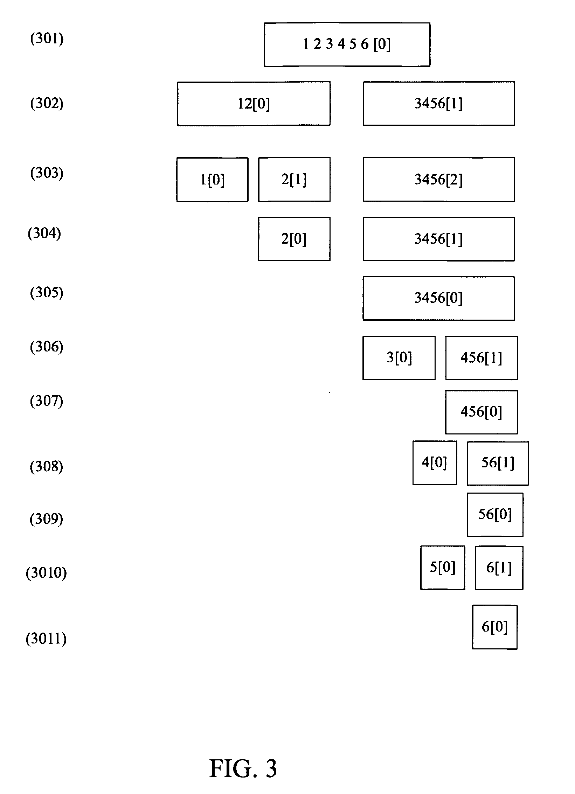

FIG. 3 is a schematic diagram of the label counting with the Binary Tree in a theoretical case, and a brief description of the counting process is:
(301) initialization, where the counter values of all the labels are 0 and the responses collide with each other;
(302) counter 001111, where the collisions occur;
(303) counter 012222, normal counting;
(304) counter 01111, normal counting
(305) counter 0000, where the collisions occur;
(306) counter 0111, normal counting;
(307) counter 000, where collisions occur;
(308) counter 011, normal counting;
(309) counter 00, where the collision occurs;
(3010) counter 01, normal counting;
(3011) counter 0, normal counting, where the counting process ends.

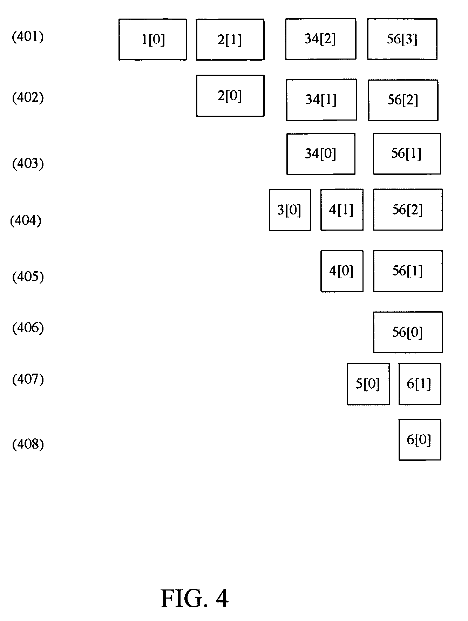

FIG. 4 is a schematic diagram of the counting after applying the method of the present invention, and the initial value is selected as 4 according to the pre-estimating number of the labels. The counting process is as follows:
(401) initialization, where each counter corresponding to the label selects a random number from 0-3, and the counters are 012233 and to respond normally;
(402) counter 01122, normal counting;
(403) counter 0011, where the collision occurs;
(404) counter 0122, normal counting;
(405) counter 011, normal counting
(406) counter 00, where the collision occurs;;
(407) counter 01, normal counting;
(408) counter 0, normal counting, where the counting process ends.

From the above description, it can be seen that, with the method of the present invention, the number of time slots for counting is reduced from 11 to 8, in which the number of time slots of collision is reduced from 5 to 2, thus reducing the probability of collision and improving the counting efficiency.

The present invention also provides a label anti-collision system, and the system comprises a reader and several labels; wherein,
the reader is adapted to predetermine the number of labels, send the number of the labels to the labels, and send start counting instruction;
each of the labels is adapted to initialize information of the label itself after receiving the start counting instruction, selecting a random number as an initial value of a counter according to the predetermined number of the labels and entering into a counting process.

In the above-mentioned system, the reader is also adapted to select the labels in an effective RF field area and send select instruction before the labels enter into the counting process;
correspondingly, the labels are adapted to perform a condition matching after receiving the select instruction, and those labels meeting the condition enter into the counting process.

In the above-mentioned system, the labels are adapted to respond the reader with information of the labels whose counter values are 0;
the reader is adapted to receive the information of the labels within a stated time slot, if the reader receives a correct response information from a label or does not receive any response information within the stated time slot, send a success acknowledgement instruction to the label, and if the reader receives a collision error information within the stated time slot, consider that a plurality of the labels respond and collisions happen, and send failure acknowledgement instructions to the labels.

In the above-mentioned system, the labels are adapted that, when receiving the success acknowledgement instructions, those labels whose label identifications conform to success command parameters including in the success acknowledgement instructions leave the counting process after responding successfully; and for those labels whose label identification do not conform to the success command parameters, the counter values of those labels are subtracted by 1, and the labels whose counter values are 0 respond to the reader;
the labels are adapted that: when the labels receive the failure acknowledgement instructions, those labels whose counter values are 0 perform to split and a random number generator is started up, and the counter values are modified according to generated random numbers; and the labels whose counter values are not 0 add the counter values by 1, and the labels whose counter values are 0 respond to the reader.

From the above description, it can be seen that, no matter it is the method or the system, the technology of the present invention can be applied to the RFID systems including the reader and the labels. When the labels enter into the counting process, the reader sends the predetermined number of the labels to the labels and also send the start counting instruction; after the labels receive the start counting instruction, they initialize their own information, each of the labels selecting one random number as the initial value of the counter according to the predetermined number of the labels and entering into the counting process. Thus, at the beginning of counting with the Binary Tree method, all the labels are hashed, thereby reducing the probability of collisions and improving the counting efficiency.

The above description is only preferred embodiments of the present invention and is not intended to limit the present invention. For those skilled in the art, it can be understood that there may be a variety of modifications and variations in the present invention which is defined by the appended claims.

## Claims

1. A Binary Tree label anti-collision method, applied in a radio frequency identification system comprising labels and a reader, the method being **characterised by** the following steps: when the labels enter into a counting process,
the reader sending (S203) a predetermined number of labels to the labels and further sending (S203) a starting counting instruction;
after a label receives the starting counting instruction, the label selecting (S204) a random number as an initial value of a counter according to the predetermined number of labels and entering into the counting process.

2. The method of claim 1, wherein, before the label enters into the counting process, the method comprises:
the reader selecting labels (S203) in an effective radio frequency field area;
the reader sending (S203) a select instruction, and after the labels receive the select instruction, the labels performing a condition matching, and when meeting the condition the labels entering into the counting process.

3. The method of claim 1 or 2, wherein, the counting process comprises:
responding (S204) the information of the labels whose counter values are 0 to the reader;
the reader receiving (S205) the information of the labels;
if the reader receives a correct response information from a label or there is no response information within a stated time slot, the reader sending (S206) a success acknowledgement instruction to the label; and if the reader receives a collision error information within the stated time slot, the reader considering (S208) that a collision happens because a plurality of labels respond, and then sending (S208) failure acknowledgement instructions to the labels.

4. The method of claim 3, wherein, when the labels receive the success acknowledgement instructions, those labels whose label identifications conform to success command parameters comprising in the success acknowledgement instructions leave (S207) the counting process after further responding successfully; and for those labels whose label identifications do not conform to the success command parameters, the counter values of those labels are further subtracted (S207) by 1, and then the labels whose counter values are 0 further respond (S207) to the reader.

5. The method of claim 3, wherein, when the labels receive the failure acknowledgement instructions, those labels whose counter values are 0 further perform to split and a random number generator is started up, and the counter values are modified (S209) according to generated random numbers; and the labels whose counter values are not 0 further add (S209) the counter values by 1, while the labels whose counter values are 0 further respond (S209) to the reader.

6. A Binary Tree label anti-collision system, comprising a reader and labels, **characterized in that**
the reader is adapted to predetermine a number of labels, send the predetermined number of the labels to the labels, and send a starting counting instruction;
each of the labels is adapted, after receiving the starting counting instruction, to select a random number as an initial value of a counter according to the predetermined number of the labels and enter into a counting process.

7. The system of claim 6, wherein, the system further comprises:
the reader is further adapted to select labels in an effective radio frequency field area and send a select instruction before the labels enter into the counting process;
the labels are further adapted to perform a condition matching after receiving the select instruction, and the labels meeting the condition enter into the counting process.

8. The system of claim 6 or 7, wherein
the labels are further adapted to respond the reader with the information of the labels whose counter values are 0;
the reader is further adapted to receive the information of the labels within a stated time slot; and if the reader receives a correct response information from a label or there is no response information within the stated time slot, send a success acknowledgement instruction to the label, and if the reader receives a collision error information within the stated time slot, consider that a collision happens because a plurality of labels respond, and send failure acknowledgement instructions to the labels.

9. The system of claim 8, wherein, the labels are further adapted that:
when receiving the success acknowledgement instructions, those labels whose label identifications conform to success command parameters comprising in the success acknowledgement instructions leave the counting process after responding successfully; and for those labels whose label identification do not conform to the success command parameters, the counter values of those labels are subtracted by 1, and the labels whose counter values are 0 respond to the reader.

10. The system of claim 8, wherein, the labels are further adapted that:
when the labels receive the failure acknowledgement instructions, those labels whose counter values are 0 perform to split and a random number generator is started up, and the counter values are modified according to generated random numbers; and the labels whose counter values are not 0 add the counter values by 1, while the labels whose counter values are 0 respond to the reader.

## Patentansprüche

1. Binärbaum-Etikettantikollisionsverfahren, angewandt in einem Funkfrequenz-Identifikationssystem, das Etiketten und eine Leseeinrichtung umfasst, wobei das Verfahren durch die folgenden Schritte
**gekennzeichnet** ist, dass:
wenn sich die Etiketten in einen Zählprozess begeben, die Leseeinrichtung eine vorbestimmte Anzahl von Etiketten an die Etiketten sendet (S203) und ferner eine Zählstartanweisung sendet (S203);
nachdem ein Etikett die Zählstartanweisung empfangen hat, das Etikett eine Zufallszahl als Anfangswert eines Zählers gemäß der vorbestimmten Anzahl von Etiketten auswählt (S204) und sich in den Zählprozess begibt.

2. Verfahren nach Anspruch 1,
wobei das Verfahren umfasst, dass, bevor sich das Etikett in den Zählprozess begibt:
die Leseeinrichtung Etiketten in einem effektiven Funkfrequenzfeldbereich auswählt (S203);
die Leseeinrichtung eine Auswahlanweisung sendet (S203), und die Etiketten, nachdem die Etiketten die Auswahlanweisung empfangen haben, einen Bedingungsabgleich durchführen, und wenn die Bedingung erfüllt ist, sich die Etiketten in den Zählprozess begeben.

3. Verfahren nach Anspruch 1 oder 2,
wobei der Zählprozess umfasst, dass:
der Leseeinrichtung hinsichtlich der Information der Etiketten, deren Zählerwerte 0 sind, geantwortet wird (S204);
die Leseeinrichtung die Information der Etiketten empfängt (S205);
wenn die Leseeinrichtung eine korrekte Antwortinformation von einem Etikett empfängt oder innerhalb eines festgelegten Zeitschlitzes keine Antwortinformation vorliegt, die Leseeinrichtung eine Erfolgsbestätigungsanweisung an das Etikett sendet (S206); und wenn die Leseeinrichtung eine Kollisionsfehlerinformation innerhalb des festgelegten Zeitschlitzes empfängt, die Leseeinrichtung in Betracht zieht (S208), dass eine Kollision stattfindet, da eine Vielzahl von Etiketten antwortet, und dann Ausfallbestätigungsanweisungen an die Etiketten sendet (S208).

4. Verfahren nach Anspruch 3,
wobei, wenn die Etiketten die Erfolgsbestätigungsanweisungen empfangen, jene Etiketten, deren Etikettidentifikationen Erfolgsbefehlsparametern entsprechen, die in den Erfolgsbestätigungsanweisungen umfasst sind, den Zählprozess nach einem weiteren erfolgreichen Antworten verlassen (S207); und bei jenen Etiketten, deren Etikettidentifikationen den Erfolgsbefehlsparametern nicht entsprechen, von den Zählerwerten jener Etiketten ferner 1 subtrahiert wird (S207), und dann die Etiketten, deren Zählerwerte 0 sind, ferner der Leseeinrichtung antworten (S207).

5. Verfahren nach Anspruch 3,
wobei, wenn die Etiketten die Ausfallbestätigungsanweisungen empfangen, jene Etiketten, deren Zählerwerte 0 sind, ferner eine Aufteilung durchführen und ein Zufallszahlgenerator gestartet wird, und die Zählerwerte gemäß erzeugten Zufallszahlen modifiziert werden (S209); und die Etiketten, deren Zählerwerte nicht 0 sind, ferner 1 zu den Zählerwerten addieren (S209), während die Etiketten, deren Zählerwerte 0 sind, ferner der Leseeinrichtung antworten (S209).

6. Binärbaum-Etikettantikollisionssystem, umfassend eine Leseeinrichtung und Etiketten,
**dadurch gekennzeichnet, dass**
die Leseeinrichtung geeignet ist, um eine Anzahl von Etiketten vorzubestimmen, die vorbestimmte Anzahl der Etiketten an die Etiketten zu senden und eine Zählstartanweisung zu senden;
jedes der Etiketten geeignet ist, um nach dem Empfang der Zählstartanweisung eine Zufallszahl als Anfangswert eines Zählers gemäß der vorbestimmten Anzahl der Etiketten auszuwählen und sich in einen Zählprozess zu begeben.

7. System nach Anspruch 6,
wobei das System ferner umfasst, dass:
die Leseeinrichtung ferner geeignet ist, um Etiketten in einem effektiven Funkfrequenzfeldbereich auszuwählen und eine Auswahlanweisung zu senden, bevor sich die Etiketten in den Zählprozess begeben;
die Etiketten ferner geeignet sind, um einen Bedingungsabgleich durchzuführen, nachdem die Auswahlanweisung empfangen wurde, und sich die Etiketten bei einer Erfüllung der Bedingung in den Zählprozess begeben.

8. System nach Anspruch 6 oder 7, wobei
die Etiketten ferner geeignet sind, um der Leseeinrichtung mit der Information der Etiketten, deren Zählerwerte 0 sind, zu antworten;
die Leseeinrichtung ferner geeignet ist, um die Information der Etiketten innerhalb eines festgelegten Zeitschlitzes zu empfangen; und wenn die Leseeinrichtung eine korrekte Antwortinformation von einem Etikett empfängt oder innerhalb des festgelegten Zeitschlitzes keine Antwortinformation vorliegt, eine Erfolgsbestätigungsanweisung an das Etikett zu senden, und wenn die Leseeinrichtung eine Kollisionsfehlerinformation innerhalb des festgelegten Zeitschlitzes empfängt, in Betracht zu ziehen, dass eine Kollision stattfindet, da eine Vielzahl von Etiketten antwortet, und Ausfallbestätigungsanweisungen an die Etiketten zu senden.

9. System nach Anspruch 8,
wobei die Etiketten ferner dazu geeignet sind, dass:
wenn die Erfolgsbestätigungsanweisungen empfangen werden, jene Etiketten, deren Etikettidentifikationen Erfolgsbefehlsparametern entsprechen, die in den Erfolgsbestätigungsanweisungen umfasst sind, den Zählprozess nach einem erfolgreichen Antworten verlassen; und bei jenen Etiketten, deren Etikettidentifikation den Erfolgsbefehlsparametern nicht entspricht, von den Zählerwerten jener Etiketten 1 subtrahiert wird, und die Etiketten, deren Zählerwerte 0 sind, der Leseeinrichtung antworten.

10. System nach Anspruch 8,
wobei die Etiketten ferner dazu geeignet sind, dass:
wenn die Etiketten die Ausfallbestätigungsanweisungen empfangen, jene Etiketten, deren Zählerwerte 0 sind, eine Aufteilung durchführen und ein Zufallszahlgenerator gestartet wird, und die Zählerwerte gemäß erzeugten Zufallszahlen modifiziert werden; und die Etiketten, deren Zählerwerte nicht 0 sind, 1 zu den Zählerwerten addieren, während die Etiketten, deren Zählerwerte 0 sind, der Leseeinrichtung antworten.

## Revendications

1. Procédé anti-collision d'étiquettes à arbre binaire, appliqué dans un système d'identification à fréquence radio comprenant des étiquettes et un lecteur, le procédé étant **caractérisé par** les étapes suivantes :
quand les étiquettes entrent dans un processus de comptage, l'envoi par le lecteur (S203) d'un nombre prédéterminé d'étiquettes aux étiquettes, et, de plus, l'envoi (S203) d'une instruction de démarrage de comptage ;
après qu'une étiquette a reçu l'instruction de démarrage de comptage, la sélection par l'étiquette (S204) d'un nombre aléatoire comme valeur initiale d'un compteur en fonction du nombre prédéterminé d'étiquettes et l'entrée dans le processus de comptage.

2. Procédé selon la revendication 1, dans lequel, avant que l'étiquette n'entre dans le processus de comptage, le procédé comprend :
la sélection d'étiquettes par le lecteur (S203) dans une zone de champ de fréquence de radio efficace ;
l'envoi par le lecteur (S203) d'une instruction de sélection, et, après que les étiquettes ont reçu l'instruction de sélection, l'exécution par les étiquettes d'une concordance de condition, et, lorsque la condition est satisfaite, l'entrée des étiquettes dans le processus de comptage.

3. Procédé selon la revendication 1 ou 2, dans lequel le processus de comptage comprend :
la réponse (S204) de l'information des étiquettes dont les valeurs de compteur sont de 0 au lecteur ;
la réception par le lecteur (S205) de l'information des étiquettes ;
si le lecteur reçoit une information de réponse correcte à partir d'une étiquette ou s'il n'y a pas d'information de réponse à l'intérieur d'un intervalle de temps défini, l'envoi par le lecteur (S206) d'une instruction d'accusé de réception de réussite à l'étiquette ; et, si le lecteur reçoit une information d'erreur de collision à l'intérieur de l'intervalle de temps défini, la constatation par le lecteur (S208) du fait qu'une collision se produit parce qu'une pluralité d'étiquettes répondent, puis l'envoi (S208) d'instructions d'accusé de réception d'échec aux étiquettes.

4. Procédé selon la revendication 3, dans lequel, lorsque les étiquettes reçoivent les instructions d'accusé de réception de réussite, les étiquettes dont les identifications d'étiquette sont conformes à des paramètres d'ordre de réussite comprennent, dans les instructions d'accusé de réception de réussite, le fait de quitter (S207) le processus de comptage après une autre réponse réussie ; et, pour les étiquettes dont les identifications d'étiquette ne sont pas conformes aux paramètres d'ordre de réussite, les valeurs de compteur de ces étiquettes se voient encore soustraire (S207) 1, après quoi les étiquettes dont les valeurs de compteur sont de 0 répondent encore (S207) au lecteur.

5. Procédé selon la revendication 3, dans lequel, lorsque les étiquettes reçoivent les instructions d'accusé de réception d'échec, les étiquettes dont les valeurs de compteur sont de 0 effectuent encore une séparation et un générateur de nombre aléatoire est démarré, et les valeurs de compteur sont modifiées (S209) en fonction de nombres aléatoires générés ; et les étiquettes dont les valeurs de compteur ne sont pas de 0 additionnent encore (S209) 1 aux valeurs de compteur, tandis que les étiquettes dont les valeurs de compteur sont de 0 répondent encore (S209) au lecteur.

6. Système anti-collision d'étiquettes à arbre binaire, comprenant un lecteur et des étiquettes, **caractérisé en ce que** :
le lecteur est adapté pour prédéterminer un nombre d'étiquettes, pour envoyer le nombre prédéterminé des étiquettes aux étiquettes, et pour envoyer une instruction de démarrage de comptage ;
chacune des étiquettes est adaptée, après la réception de l'instruction de démarrage de comptage, pour sélectionner un nombre aléatoire comme valeur initiale d'un compteur en fonction du nombre prédéterminé des étiquettes, et pour entrer dans un processus de comptage.

7. Système selon la revendication 6, le système comprenant de plus :
le fait que le lecteur est de plus adapté pour sélectionner des étiquettes dans une zone de champ de fréquence de radio efficace et pour envoyer une instruction de sélection avant que les étiquettes n'entrent dans le processus de comptage ;
le fait que les étiquettes sont de plus adaptées pour effectuer une concordance de condition après la réception de l'instruction de sélection, et que les étiquettes satisfaisant à la condition entrent dans le processus de comptage.

8. Système selon la revendication 6 ou 7, dans lequel :
les étiquettes sont de plus adaptées pour répondre au lecteur avec l'information des étiquettes dont les valeurs de compteur sont de 0 ;
le lecteur est de plus adapté pour recevoir l'information des étiquettes à l'intérieur d'un intervalle de temps défini ; et, si le lecteur reçoit une information de réponse correcte à partir d'une étiquette ou s'il n'y a pas d'information de réponse à l'intérieur de l'intervalle de temps défini, envoyer une instruction d'accusé de réception de réussite à l'étiquette, et, si le lecteur reçoit une information d'erreur de collision à l'intérieur de l'intervalle de temps défini, constater qu'une collision se produit parce qu'une pluralité d'étiquettes répondent, et envoyer des d'instructions d'accusé de réception d'échec aux étiquettes.

9. Système selon la revendication 8, dans lequel les étiquettes sont de plus adaptées pour que :
lors de la réception des instructions d'accusé de réception de réussite, les étiquettes dont les identifications d'étiquette sont conformes aux paramètres d'ordre de réussite comprennent, dans les instructions d'accusé de réception de réussite, le fait de quitter le processus de comptage après une réponse réussie ; et, pour les étiquettes dont l'identification d'étiquette n'est pas conforme aux paramètres d'ordre de réussite, les valeurs de compteur de ces étiquettes se voient soustraire 1, et les étiquettes dont les valeurs de compteur sont de 0 répondent au lecteur.

10. Système selon la revendication 8, dans lequel les étiquettes sont de plus adaptées pour que :
lorsque les étiquettes reçoivent les instructions d'accusé de réception d'échec, les étiquettes dont les valeurs de compteur sont de 0 effectuent une séparation et un générateur de nombre aléatoire est démarré, et les valeurs de compteur sont modifiées en fonction de nombres aléatoires générés ; et les étiquettes dont les valeurs de compteur ne sont pas de 0 additionnent 1 aux valeurs de compteur, tandis que les étiquettes dont les valeurs de compteur sont de 0 répondent au lecteur.
